# DEMANDE DE BREVET EUROPEEN

(11) **EP 1 054 204 A2**
(43) Date de publication de la demande: **22.11.2000**
(21) Numéro de dépôt: 00401323.1
(22) Date de dépôt: 15.05.2000
(51) Int. Cl.: F16L 21/03, B28B 21/56, E03F 3/04

(54) **Tuyau, notamment en beton, comportant un joint d'étanchéité et procédé de fabrication d'un tel tuyau**

(30) Priorité: 15.05.1999 GB 9911322
(71) Demandeur: Bonna Sabla, 92800 Puteaux (FR)
(72) Inventeur: Fifer, Robert James, West Bridford, Nottingham NG2 GBB (GB)
(74) Mandataire: Texier, Christian

(57) **Abrégé**

La présente invention concerne la réalisation d'une étanchéité entre des abouts, respectivement mâle et femelle, de deux tuyaux ou analogues.

L'un (7), au moins des abouts présente une face périphérique (9) d'étanchéité présentant une gorge annulaire (15) dans laquelle est retenu un premier anneau, notamment un joint annulaire d'étanchéité (21), susceptible d'occuper une position de repos dans laquelle il est intégré à la gorge et une position active dans laquelle il fait saillie hors de celle-ci. Le premier anneau (21) est sollicité de sa position de repos vers sa position active par un deuxième anneau, notamment un anneau de calage (43), élastiquement compressible, retenu par emboîtement dans la gorge (15).

Le deuxième anneau (43) peut être mis en place seulement lors de la pose du tuyau (1) ou analogue, ce qui permet de laisser jusqu'alors le premier anneau (21) dans sa position de repos.

## Description

La présente invention concerne un tuyau ou analogue, notamment en béton, du type comportant:
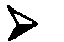 au moins un about tubulaire d'axe longitudinal déterminé, destiné à s'emboîter longitudinalement avec un about tubulaire, approximativement coaxial, d'un autre tuyau ou analogue et présentant à cet effet une face annulaire frontale, transversale, d'extrémité et une face périphérique longitudinale d'étanchéité placée en retrait, longitudinalement, par rapport à la face frontale et destinée à venir alors se placer en regard, transversalement, d'une face périphérique longitudinale, antagoniste, de l'about de l'autre tuyau ou analogue, la face périphérique d'étanchéité comportant une gorge annulaire transversale de réception de moyens d'étanchéité vis-à-vis de la face périphérique antagoniste,
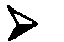 des moyens d'étanchéité vis-à-vis de la face périphérique antagoniste, comportant:
   - un premier anneau transversal ancré dans la gorge par une zone du premier anneau et de la gorge constituant la zone respective la plus proche, longitudinalement, de la face frontale, le premier anneau étant susceptible de fléchir entre une position de repos dans laquelle il est escamoté dans la gorge, par rapport à un prolongement géométrique de la face périphérique d'étanchéité, et une position active dans laquelle il fait partiellement saillie transversalement hors de celle-ci, par rapport audit prolongement géométrique, en s'éloignant progressivement de celui-ci dans le sens longitudinal d'un éloignement par rapport à la face frontale,
   - des moyens de sollicitation élastique du premier anneau de sa position de repos vers sa position active.

On considérera ici comme analogues à des tuyaux tous les conduits et éléments de construction assemblables par emboîtement tels que cadres, galeries, regards de visite, conduits emboîtables dits 〈〈ovoïdes〉〉, conduits du type commercialisé sous la marque enregistrée 〈〈Modulovale〉〉 et modules d'abris, ces exemples n'étant nullement limitatifs ; toutefois, pour des raisons de simplicité, on se référera le plus souvent, par la suite, à des tuyaux.

Un tuyau ou analogue du type indiqué en préambule est décrit en référence à la figure 6 du brevet britannique GB-A-1 399 562, dans un mode de réalisation dans lequel le premier anneau constitue un joint d'étanchéité qui, dans sa position active, est susceptible d'établir un appui d'étanchéité contre la face périphérique antagoniste. Les moyens de sollicitation élastiques de ce premier anneau ou joint, de sa position de repos vers sa position active, sont constitués par un ressort métallique annulaire, transversal, noyé dans la masse du premier anneau. Plus précisément, ce ressort est formé par un ressort hélicoïdal que l'on aplatit sous forme d'une bande et que l'on enroule ensuite de telle sorte qu'il présente une conformation générale tronconique, vers laquelle il tend à revenir par élasticité s'il en est écarté.

Cette technique connue présente un certain nombre d'inconvénients.

La nécessité d'inclure le ressort métallique dans le premier anneau lors de la fabrication de celui-ci complique considérablement cette fabrication et entraîne un coût sensible.

Elle complique également la fabrication du tuyau ou analogue proprement dit, lorsque cette fabrication s'effectue par moulage, notamment de béton, dans la mesure où il est alors nécessaire, pendant tout le moulage, de retenir le premier anneau dans une configuration correspondant à la position de repos, c'est-à-dire dans une configuration qu'il tend à quitter élastiquement pour gagner sa position active.

Naturellement, dès le démoulage, le premier anneau ainsi libéré gagne sa configuration correspondant à la position active, ce qui oblige à n'effectuer le démoulage que lorsque le matériau constitutif du tuyau ou analogue a effectué sa prise complète, afin de ne pas risquer que le pivotement du premier anneau de la position de repos à la position active se traduise par une détérioration du matériau constitutif du tuyau ou analogue autour de l'ancrage du premier anneau dans ce matériau, ce qui allonge les temps de fabrication.

De plus, le premier anneau ainsi placé dans sa position active dès la fabrication présente une grande vulnérabilité lors de la manutention, du stockage et du transport des tuyaux ou analogues, en particulier sur un site de pose des tuyaux ou analogues.

Enfin, la présence du ressort métallique dans le premier anneau risque de provoquer un endommagement de celui-ci, et ce risque est d'autant plus grave que, si le matériau constitutif du premier anneau est détérioré, l'humidité ambiante peut accéder au ressort métallique, provoquer sa corrosion et par conséquent une perte d'élasticité de ce ressort, ce qui peut entraîner des pertes d'étanchéité. Certes, on peut avoir recours pour le ressort à des matériaux inoxydables dans les conditions d'utilisation des tuyaux ou analogues, mais ceci accroît naturellement le prix de revient du ressort.

Le but de la présente invention est de remédier à ces inconvénients et, à cet effet, la présente invention propose un tuyau ou analogue du type indiqué en préambule, caractérisé en ce que les moyens de sollicitation élastique du premier anneau comportent un deuxième anneau transversal, élastiquement compressible, de calage du premier anneau, le deuxième anneau comportant un talon emboîté dans une zone de la gorge située à l'opposé, longitudinalement, de la face frontale par rapport au premier anneau et présentant au contact de celui-ci une face servant d'appui pour celui-ci à l'opposé, longitudinalement, de la face frontale, de telle sorte que le premier anneau, en position active, et/ou le deuxième anneau soient susceptibles de venir en appui d'étanchéité contre la face périphérique antagoniste, respectivement le premier anneau et/ou le deuxième anneau étant étanches.

Un homme du métier comprendra aisément que la face périphérique d'étanchéité, portant le premier anneau et le deuxième anneau, peut aussi bien être une face périphérique intérieure d'un about femelle qu'une face périphérique d'un about mâle.

Le premier anneau peut être étanche et conserver le rôle de joint d'étanchéité qui est le sien dans le cas du brevet britannique précité.

Alors, le fait de prévoir, conformément à la présente invention, un deuxième anneau élastiquement compressible, assurant un calage du premier anneau ou joint pour amener élastiquement celui-ci à sa position active permet de se dispenser d'intégrer au premier anneau un quelconque ressort, ce qui simplifie considérablement la fabrication du premier anneau, même si l'on prend en compte la nécessité de fabriquer en outre le deuxième anneau, qui peut être mono- matière comme le premier anneau lui-même.

En outre, l'absence de tout ressort métallique à l'intérieur du premier anneau se traduit par une disparition de tout risque de détérioration du premier anneau par un tel ressort et de tout risque de corrosion, c'est-à-dire de perte progressive d'efficacité du premier anneau en termes d'étanchéité.

La présente invention offre cependant la possibilité supplémentaire de donner également au deuxième anneau, alors étanche, une fonction de joint d'étanchéité en complément ou en remplacement du premier anneau.

Enfin, un tuyau ou analogue, selon l'invention, se prête à une fabrication par un procédé en lui-même caractéristique de la présente invention, comportant la succession des étapes consistant à :
a) réaliser, notamment par moulage de béton, un tuyau ou analogue comportant au moins un about tubulaire d'axe longitudinal déterminé, présentant une face annulaire frontale, transversale, d'extrémité et une face périphérique longitudinale d'étanchéité placée en retrait, longitudinalement, par rapport à la face frontale en intégrant dans une gorge annulaire transversale de la face périphérique d'étanchéité un premier anneau transversal, ancré dans la gorge par une zone du premier anneau et de la gorge constituant la zone respective la plus proche, longitudinalement, de la face frontale,
b) faire fléchir le premier anneau jusqu'à une position active dans laquelle il fait partiellement saillie transversalement hors de la gorge, par rapport à un prolongement géométrique de la face périphérique d'étanchéité, en s'éloignant progressivement de celui-ci dans le sens d'un éloignement par rapport à la face frontale,
   et caractérisé en ce que l'on met en oeuvre l'étape b en emboîtant dans une zone de la gorge située à l'opposé, longitudinalement, de la face frontale par rapport au premier anneau un talon d'un deuxième anneau transversal, élastiquement compressible, présentant au contact du premier anneau une face servant d'appui pour celui-ci à l'opposé, longitudinalement, de la face frontale.

Un homme du métier comprendra aisément que l'on puisse, dans un tel cas, dissocier dans le temps l'étape b de l'étape a, c'est-à-dire réaliser d'abord le tuyau ou analogue avec le premier anneau mais sans le deuxième anneau, si bien que le premier anneau peut conserver sa position de repos, et de ne mettre en place qu'ultérieurement le deuxième anneau sur l'ensemble ainsi formé.

Ainsi, un mode de mise en oeuvre préféré de l'étape a comporte la succession des étapes consistant à :
a₁) choisir ou réaliser un anneau de coffrage, d'axe longitudinal déterminé, présentant une face annulaire frontale, transversale, de coffrage complémentaire de la face frontale à réaliser et une face périphérique longitudinale de coffrage placée en saillie, longitudinalement, par rapport à la face frontale de coffrage et complémentaire de la face périphérique d'étanchéité à réaliser, abstraction faite de la gorge de celle-ci,
a₂) fixer de façon amovible le premier anneau, en position de repos, sur la face périphérique de coffrage dans une position correspondant à celle de la gorge, le premier anneau présentant un relief d'ancrage en saillie transversale à l'opposé de la face périphérique de coffrage, dans la zone du premier anneau la plus proche, longitudinalement, de la face frontale de coffrage,
a₃) assembler à l'anneau de coffrage des organes longitudinaux de coffrage définissant avec lui une empreinte de moulage de forme complémentaire de celle du tuyau ou analogue à réaliser,
a₄) emplir l'empreinte d'un matériau durcissable à l'état fluide, notamment du béton, en noyant dans ce matériau le premier anneau en position de repos, qui y ménage la gorge et s'y ancre par son relief d'ancrage,
a₅) autoriser ou provoquer le durcissement du matériau durcissable et, après qu'il ait suffisamment durci, séparer des organes de coffrage et de l'anneau de coffrage l'ensemble formé par le matériau durcissable et par le premier anneau en position de repos, ancré dans ce matériau par son relief d'ancrage.

La dissociation entre le premier anneau, pouvant former joint d'étanchéité et les moyens de sollicitation élastique de celui-ci de sa position de repos vers sa position active, à savoir en pratique le deuxième anneau pouvant simplement faire office de calage mais pouvant également former joint d'étanchéité, se révèle alors particulièrement avantageuse.

En effet, le premier anneau peut tendre à conserver naturellement sa position de repos ou une position proche de celle-ci, ce qui facilite sa retenue provisoire sur l'anneau de coffrage, tant que le matériau durcissable n'a pas durci. En outre, dans la mesure où le premier anneau n'a pas tendance à gagner élastiquement sa position active dès le démoulage, il est possible de pratiquer ce démoulage dès que le matériau durcissable est stabilisé dans sa forme, sans attendre qu'il ait complètement durci, sans risque pour autant de voir le premier anneau s'en dissocier.

De façon plus générale, quel que soit le matériau constitutif du tuyau ou analogue au niveau de son about, c'est-à-dire quelle que soit la façon dont on met en oeuvre l'étape a du procédé selon l'invention, le premier anneau peut tendre à conserver sa position de repos à l'issue de l'étape a, c'est-à-dire en l'absence du deuxième anneau, ce qui permet de stocker, de transporter et de manutentionner, notamment sur le chantier, un ensemble dans lequel le premier anneau d'étanchéité ne forme aucune saillie ou pratiquement aucune, c'est-à-dire court un risque minimal d'être endommagé. En d'autres termes, l'étape b de mise en place du deuxième anneau et de fléchissement du premier anneau vers sa position active peut être réalisée immédiatement avant le transport du tuyau ou analogue vers le chantier, ou encore sur le chantier, immédiatement avant la pose du tuyau ou analogue par emboîtement avec un autre tuyau ou analogue, ce qui réduit considérablement la durée de vulnérabilité du premier anneau.

Plusieurs conformations géométriques peuvent être choisies pour le deuxième anneau mais, de préférence, que la face d'appui pour le premier anneau est inclinée par rapport à l'axe de façon à s'éloigner progressivement du talon dans le sens longitudinal d'un éloignement par rapport à la face frontale. Ainsi peut s'établir entre la face d'appui et le premier anneau un contact continu, favorable à la répartition des contraintes d'appui mutuel.

La face d'appui ainsi inclinée peut être avantageusement bordée, dans le sens longitudinal d'un éloignement par rapport à la face frontale, par une arête annulaire transversale bordant la face d'appui pour le premier anneau dans le sens longitudinal d'un éloignement par rapport à la face frontale et constituant la limite du deuxième anneau dans le sens transversal d'un éloignement par rapport au talon.

Bien que le deuxième anneau puisque être intégralement logé à l'intérieur de la gorge, du moins lorsqu'il n'est pas seul à devoir assurer l'étanchéité vis-à-vis de la face périphérique antagoniste, ce qui laisse au premier anneau une large aptitude à fléchir librement, c'est-à-dire sans appui sur la face d'appui du deuxième anneau, le deuxième anneau fait de préférence partiellement saillie transversalement hors de la gorge, par rapport au prolongement géométrique de la face périphérique d'étanchéité, par exemple par l'arête annulaire précitée, la valeur de cette saillie étant au plus égale à celle du premier anneau en position active lorsqu'au moins le premier anneau est étanche pour venir en appui d'étanchéité contre la face périphérique antagoniste en position active.

On peut ainsi limiter, voire supprimer, la possibilité pour le premier anneau de fléchir librement, c'est-à-dire sans appui sur le deuxième anneau dans sa zone la plus éloignée de la gorge.

Lorsque le deuxième anneau, au moins, est étanche pour venir en appui d'étanchéité contre la face périphérique antagoniste, la saillie qu'il forme transversalement hors de la gorge, par rapport au prolongement géométrique de la face périphérique d'étanchéité, peut également être supérieure à celle du premier anneau en position active.

Avantageusement, la gorge et le premier anneau, dans sa position de repos, présentent des sections respectives approximativement rectangulaires, de la façon illustrée dans le brevet britannique prédté, et l'on peut avantageusement prévoir que le talon du deuxième anneau présente à l'opposé, longitudinalement, de la face frontale par rapport à la face d'appui pour le deuxième anneau une section complémentaire de celle de la gorge, ce qui permet d'assurer un ancrage efficace du deuxième anneau, par son talon, dans celle-ci.

Un avantage supplémentaire de la présente invention par rapport à la technique décrite dans le brevet britannique précité réside dans la possibilité de choisir indépendamment l'un de l'autre le premier anneau et le deuxième anneau tendant à l'amener élastiquement de sa position de repos à sa position active, c'est-à-dire de disposer d'un large éventail de possibilités, notamment en termes de pression d'application du premier anneau et/ou du deuxième anneau sur la face périphérique antagoniste, aux fins d'obtenir l'étanchéité, en disposant d'une part d'une gamme réduite de premiers anneaux et d'autre part d'une gamme réduite de deuxièmes anneaux, que l'on associe au choix.

On peut ainsi choisir les premier et deuxième anneaux de telle sorte qu'ils présentent la même dureté, ou encore de telle sorte que le deuxième anneau présente une dureté supérieure ou inférieure à celle du premier anneau. A titre d'exemple non limitatif, on peut prévoir que le premier anneau, lorsqu'il constitue le joint, présente une dureté de l'ordre de 30 à 55° DIDC, de préférence 45° DIDC, et lui associer un deuxième anneau, servant alors de calage, de dureté choisie en fonction de l'étanchéité à obtenir.

Avantageusement, mais non exclusivement, le premier anneau et/ou le deuxième anneau sont réalisés dans en un matériau élastomère choisi dans un groupe comportant l'éthylène- propylène- diène- monomère et le caoutchouc styrène- butadiène.

Dans la mesure où une canalisation ou analogue, comportant au moins deux tuyaux ou analogues dont l'un comporte un about tubulaire femelle d'axe longitudinal déterminé dont l'autre comporte un about tubulaire mâle emboîté approximativement coaxialement dans l'about tubulaire femelle et réalisée à partir d'au moins un tuyau selon l'invention, est originale en comparaison avec une canalisation comportant au moins un tuyau ou analogue réalisé conformément aux enseignements du brevet britannique précité, la présente invention s'étend également à une telle canalisation ou analogue, caractérisée en ce que l'un, au moins, des tuyaux ou analogues est conforme à la présente invention et porte le premier anneau et le deuxième anneau, sollicitant élastiquement le premier anneau vers sa position active, le premier anneau en position active et/ou le deuxième anneau étant placés ainsi en contrainte élastique d'appui d'étanchéité contre la face périphérique antagoniste de l'about de l'autre tuyau ou analogue.

Bien plus, une telle canalisation ou analogue selon l'invention peut se caractériser en ce que chacun des tuyaux ou analogues est conforme à la présente invention et porte un exemplaire respectif du premier anneau et du deuxième anneau, sollicitant élastiquement le premier anneau vers sa position active, le premier anneau en position active et/ou le deuxième anneau étant placés en contrainte élastique d'appui d'étanchéité contre la face périphérique d'étanchéité de l'autre tuyau ou analogue, faisant office de face périphérique antagoniste.

Alors, la géométrie des abouts mutuellement emboîtés peut être telle que chaque premier anneau et/ou chaque deuxième anneau soient situés à l'opposé, longitudinalement, de la face frontale de l'autre tuyau ou analogue par rapport au premier anneau et au deuxième anneau de cet autre tuyau ou analogue, ce qui assure non seulement deux étages d'étanchéité entre les deux tuyaux ou analogues, mais également un verrouillage mutuel des tuyaux ou analogues à l'encontre d'un déboîtement.

Cette géométrie peut être également telle que chaque premier anneau soit situé à l'opposé, longitudinalement, de la face frontale de l'autre tuyau ou analogue par rapport au premier anneau de cet autre tuyau ou analogue et que chaque deuxième anneau, sollicitant élastiquement le premier anneau correspondant vers sa position active, le retienne ainsi en contrainte élastique d'appui d'étanchéité contre une face périphérique du deuxième anneau de l'autre tuyau ou analogue, faisant office de face périphérique antagoniste, ce qui suppose naturellement que chaque premier et chaque deuxième anneau soient étanches à cet effet. On conserve ainsi l'effet précité de verrouillage mutuel des tuyaux ou analogues à l'encontre d'un déboîtement et l'avantage de disposer de deux étages d'étanchéité ; en outre, l'étanchéité s'effectue dans ce cas non plus par contact entre chaque joint et le matériau constitutif de l'autre tuyau ou analogue, mais par contact entre chaque joint et l'anneau de calage correspondant à l'autre joint, ce qui permet d'établir une étanchéité fiable même si le matériau constitutif des abouts présente une certaine irrégularité de surface.

On retrouve cet avantage, toutefois sans effet de verrouillage mutuel des tuyaux ou analogues, dans un autre mode de mise en oeuvre de l'invention, selon lequel chaque premier anneau est situé en regard, transversalement, du premier anneau de l'autre tuyau ou analogue, et chaque deuxième anneau, sollicitant élastiquement le premier anneau correspondant vers sa position active, le retient ainsi en contrainte élastique d'appui d'étanchéité contre le premier anneau de l'autre tuyau ou analogue, faisant office de face périphérique antagoniste, au moins chacun des premiers anneaux étant étanche à cet effet.

D'autres caractéristiques et avantages de ces différents aspects de l'invention ressortiront de la description d-dessous, relative à un exemple non limitatif de mise en oeuvre, ainsi que des dessins annexés qui font partie intégrante de cette description.
La figure 1 montre un about femelle d'un tuyau selon l'invention, pour l'essentiel en béton moulé, comportant un premier anneau, formant joint d'étanchéité, retenu en position active par un deuxième anneau, formant anneau de calage, de façon caractéristique de la présente invention, en une vue en coupe par un plan incluant l'axe longitudinal de l'about.
La figure 2 montre, en une vue analogue à celle de la figure 1, le même about femelle alors que le joint d'étanchéité occupe sa position de repos, en l'absence du joint de calage, c'est-à-dire dans un état intermédiaire du tuyau selon l'invention, à la sortie du moule mais avant insertion de cet anneau de calage.
Les figures 3 et 4 montrent, à plus grande échelle, des sections respectives du joint d'étanchéité, en position de repos, et de l'anneau de calage dans un état d'absence de contrainte de compression élastique; ces sections correspondent respectivement à un détail de la figure 2 et à un détail de la figure 1.
La figure 5 montre, en une vue en coupe analogue à celle des figures 1 et 2, une partie du moule utilisé pour la fabrication du tuyau illustré à la figure 1 et 2 et dans lequel le joint d'étanchéité est retenu provisoirement, dans sa position de repos.
Les figures 6 à 9 montrent, en des vues analogues à celle de la figure 5, différents modes de retenue provisoire du joint d'étanchéité dans le moule.
La figure 10 illustre, en une vue en coupe analogue à celle des figures 1 et 2, un mode de coopération entre les abouts respectivement mâle et femelle de deux tuyaux conformes à la présente invention.
Les figures 11 et 12 illustrent, en une vue respectivement analogue à celle de la figure 10, deux autres modes de coopération entre les abouts respectivement mâle et femelle de deux tuyaux conformes à la présente invention.

Il est bien entendu que, même si la présente invention est décrite en référence à un tuyau en béton, elle s'étend à tout autre produit analogue à un tuyau, dans le sens défini plus haut, que ce produit soit réalisé en béton ou en un autre matériau. L'adaptation, à des produits autres que des tuyaux en béton, des dispositions et des étapes de procédé qui vont être décrites à présent relève des aptitudes normales d'un Homme du métier.

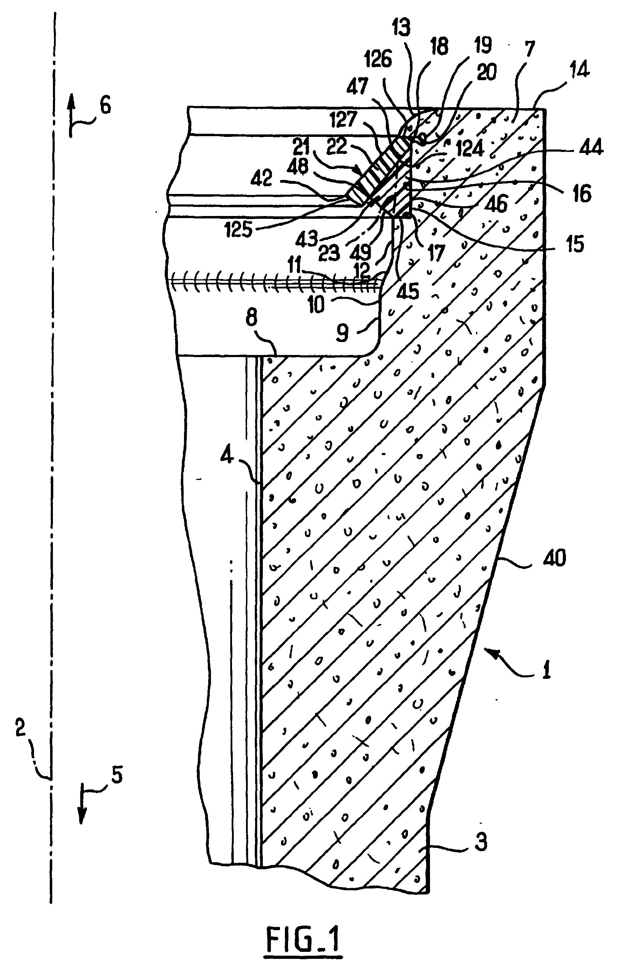

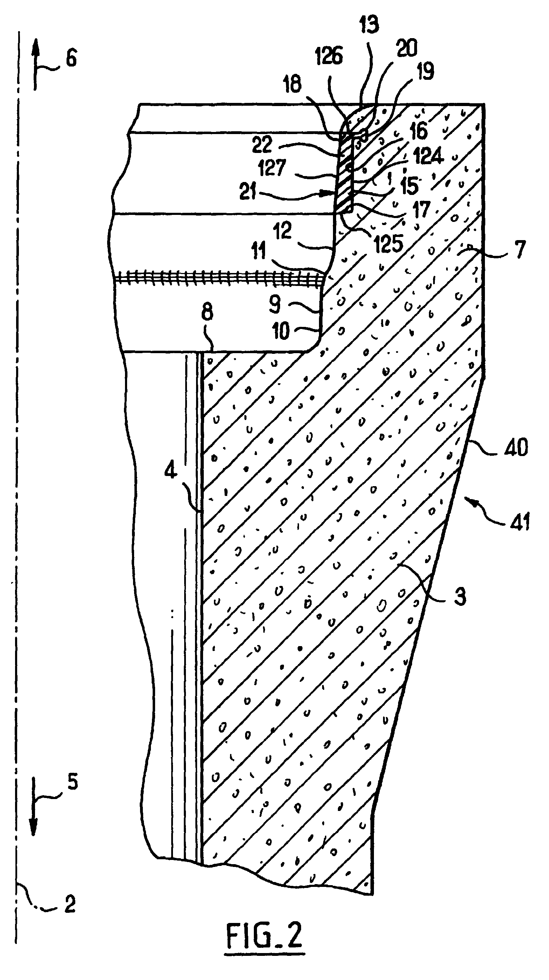

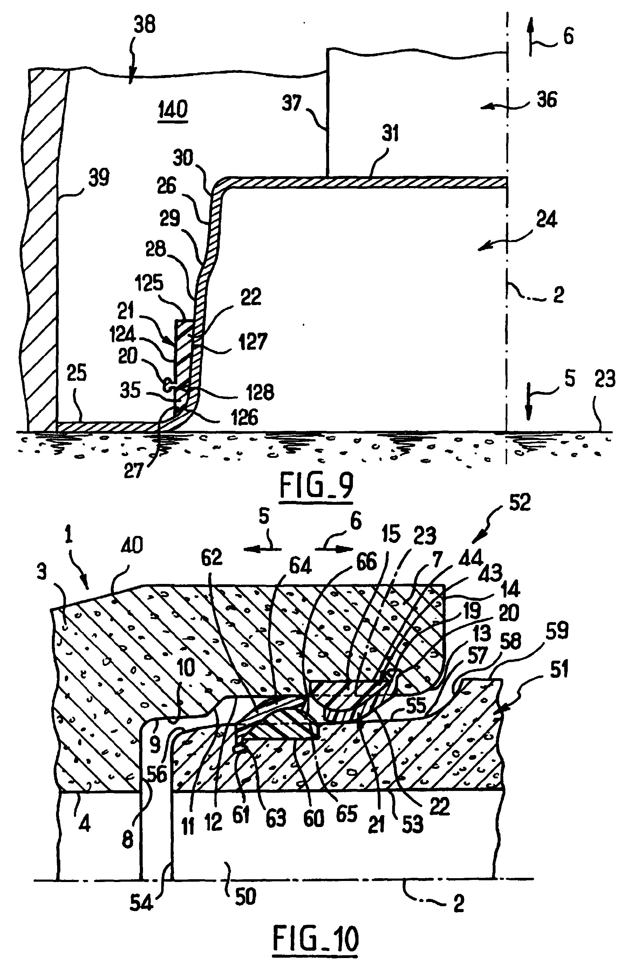

On se référera en premier lieu à la figure 1, où l'on a désigné par 1 un tuyau selon l'invention, présentant une symétrie de révolution autour d'un axe longitudinal 2, ici horizontal, et comportant un fût tubulaire 3, longitudinal, délimité vers l'axe 2, de façon courante, par une face périphérique intérieure 4 cylindrique de révolution autour de cet axe. Dans un sens 5 de l'axe 2, le fût 3 se termine par un about non représenté, qui peut être un about femelle ou, de préférence, un about mâle dont un exemple sera décrit en référence à la figure 10 à propos d'un autre tuyau selon l'invention; dans le sens opposé 6, il se termine par un about femelle 7, qui va être décrit en référence aux figures 1 et 2. Dans cet exemple, le fût 3 est intégralement réalisé en une seule pièce de béton moulé, symétrique de révolution autour de l'axe 2, y compris au niveau de ses deux abouts.

Au niveau de l'about mâle, la face 4 se poursuit dans le sens 5 jusqu'a une face frontale, transversale, d'extrémité, qui est approximativement plane, annulaire de révolution autour de l'axe 2 et tournée dans le sens 5 comme on le déduira de la description ultérieure de la figure 10.

Dans le sens 6, au niveau de l'about femelle 7, la face 4 se raccorde à une face transversale 8 plane, annulaire de révolution autour de l'axe 2 auquel elle est perpendiculaire, cette face 8 étant tournée dans le sens 6 et reliant la face 4 à une face périphérique intérieure 9, longitudinale, de l'about femelle 7, laquelle présente une forme de révolution autour de l'axe 2 et comporte quatre tronçons 10, 11, 12, 13 qui se succèdent dans cet ordre, dans le sens 6, à partir de la face 8. Les tronçons 10 et 12 sont approximativement cylindriques de révolution autour de l'axe 2 mais légèrement évasés dans te sens 6 pour des raisons de fabrication par moulage. Le tronçon 12 présente un diamètre minimal supérieur au diamètre maximal du tronçon 10, et le tronçon 11 constitue entre eux un tronçon de transition, approximativement tronconique de révolution autour de l'axe 2 avec un évasement plus marqué que celui des tronçons 10 et 12 dans le sens 6. Le tronçon 13 présente quant à lui une forme arrondie convexe vers l'axe 2 et dans le sens 6, avec une section approximativement en quart de cercle dans une vue en coupe par un plan incluant l'axe 2, et relie le tronçon 12, dans le sens 6, à une face frontale d'extrémité 14 de l'about femelle 7, et plus généralement du tuyau 1 considéré dans son ensemble. Cette face 14 est transversale, approximativement plane, annulaire de révolution autour de l'axe 2 et tournée dans le sens 6. La jonction du tronçon 11 avec les tronçons 10 et 12 et la jonction du tronçon 10 avec la face annulaire, transversale 8 présentent la forme d'arêtes adoucies.

Cette conformation générale est connue en elle-même d'un Homme du métier, et ne sera pas décrite davantage.

Dans son tronçon 12, la face périphérique intérieure 9 de l'about femelle 7 présente une gorge 15 annulaire de révolution autour de l'axe 2 et plus proche, longitudinalement, du tronçon 13 que du tronçon 11.

Plus précisément, cette gorge 15 est délimitée par un fond 16 cylindrique de révolution autour de l'axe 2 avec un diamètre supérieur à celui de la jonction entre les tronçons 12 et 13 de la face périphérique intérieure 9, et par deux flancs transversaux 17, 18, l'un et l'autre annulaires de révolution autour de l'axe 2, tournés respectivement dans le sens 6 pour le flanc 17 qui est le plus proche, longitudinalement, du tronçon 11 et dans le sens 5 pour le flanc 18 qui est le plus proche, longitudinalement, du tronçon 13. Par exemple, le flanc 18 coïncide approximativement avec la liaison entre les tronçons 12 et 13 de la face périphérique intérieure 9 alors que le flanc 17 est situé approximativement a égale distance, longitudinalement, de cette jonction et de la jonction du tronçon 12 avec le tronçon 11. Le flanc 18 est par exemple plan et perpendiculaire à l'axe 2 alors que le flanc 17 n'est qu'approximativement plan et perpendiculaire à l'axe 2 et, de préférence, présente une forme légèrement tronconique de révolution autour de cet axe et s'évasant dans le sens 6, comme on le déduira de la description, ultérieure, du mode d'aménagement de la gorge 15 dans l'about femelle 7 à la fabrication du tuyau 1.

A la jonction entre le fond 16 et le flanc 18 de la gorge 15, le fond 16 de celle-ci est creusé, dans le sens d'un éloignement par rapport à l'axe 2, d'une rainure 19 annulaire de révolution autour de l'axe 2 et présentant une section en queue d'aronde dans l'exemple illustré, lorsqu'elle est vue en coupe par un plan incluant l'axe 2, étant entendu que l'on pourrait choisir toute autre section, par exemple en forme de rectangle, de polygone régulier ou irrégulier, ou encore de cercle, dès lors que cette section permettrait l'ancrage, dans le béton du tuyau 1, d'une partie d'ancrage correspondante 20, également annulaire de révolution autour de l'axe 2, d'un joint annulaire, transversal 21 apte à présenter plusieurs conformations dans lesquelles il conserve généralement une symétrie de révolution autour de l'axe 2.

La partie d'ancrage 20 du joint 21 présente une section rigoureusement complémentaire de celle de la rainure 19, lorsqu'elle est vue en coupe par un plan incluant l'axe 2, de façon à assurer un ancrage du joint 21 dans le béton constitutif du tuyau 1, et le joint 21 présente par ailleurs, de façon solidaire de cette partie d'ancrage 20 par réalisation en une seule pièce avec celle-ci, une partie d'étanchéité 22 dont la section par un plan incluant l'axe 2 est rigoureusement complémentaire de celle de la gorge 15 lorsque le joint 21 occupe une position de repos dans laquelle, comme il est illustré à la figure 2, sa partie d'étanchéité 22 est intégralement escamotée à l'intérieur de la gorge 15 par rapport à un prolongement géométrique 23 du tronçon 12 de la face périphérique intérieure 9 en regard de la gorge 15 et, plus précisément, affleure ce prolongement géométrique 23. On a désigné respectivement par 124, 125, 126, 127 des faces de la partie d'étanchéité 22 du joint 21 qui, dans la position de repos illustré à la figure 2, sont respectivement complémentaires du fond 16, des flancs 17 et 18 de la gorge 15 et du prolongement géométrique 23 du tronçon 12 de la face périphérique intérieure 9.

On observera que la rainure 19 et la partie d'ancrage 20 sont situées dans les zones respectives du fond 16 de la gorge 15 et du joint 21 qui sont les plus proches de la face frontale d'extrémité 14 de l'about femelle 7.

Dans l'exemple illustré, la position de repos du joint 21, illustrée à la figure 2, constitue une position stable, que le joint 21 prend lorsqu'il n'est soumis à aucune contrainte notamment de fléchissement de sa partie d'étanchéité 22 par rapport à sa partie d'ancrage 20, et vers laquelle il tend à revenir par élasticité si on le déforme à partir de cette position. Si, comme il apparaîtra plus loin, le joint 21 est installé en légère contrainte élastique de traction circonférentielle, cette position de repos peut également constituer une position instable, que le joint 21 tend à quitter par élasticité pour prendre une position stable dans laquelle sa partie d'étanchéité 22 se rétrécit légèrement dans le sens 5, en formant une légère saillie par rapport au prolongement géométrique 23 du tronçon 12 de face périphérique intérieure; un Homme du métier adaptera aisément à un tel cas la description qui va suivre, faite en référence à l'exemple illustré.

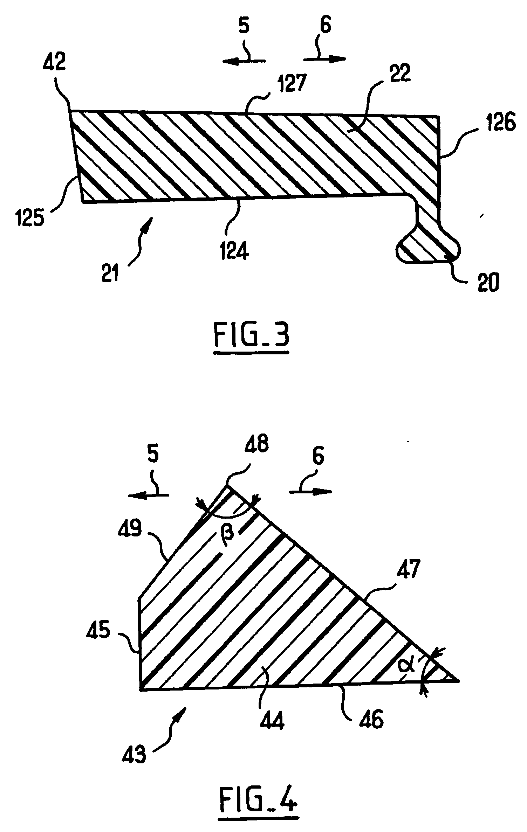

Comme le montre la figure 3, la section de la zone d'étanchéité 22 du joint 21, par un plan incluant l'axe 2, non visible à cette figure 3, est approximativement rectangulaire mais s'évase légèrement, par écartement mutuel des faces 124 et 127, dans le sens 5, de même qu'elle s'évase dans le sens d'un rapprochement vis-à-vis de l'axe 2 par écartement de la face 125 par rapport à la face 126.

L'étroite complémentarité entre le joint d'étanchéité 21 et la gorge 15 résulte directement d'un mode de fabrication préféré, selon l'invention, pour le tuyau 1 comportant le joint d'étanchéité 21.

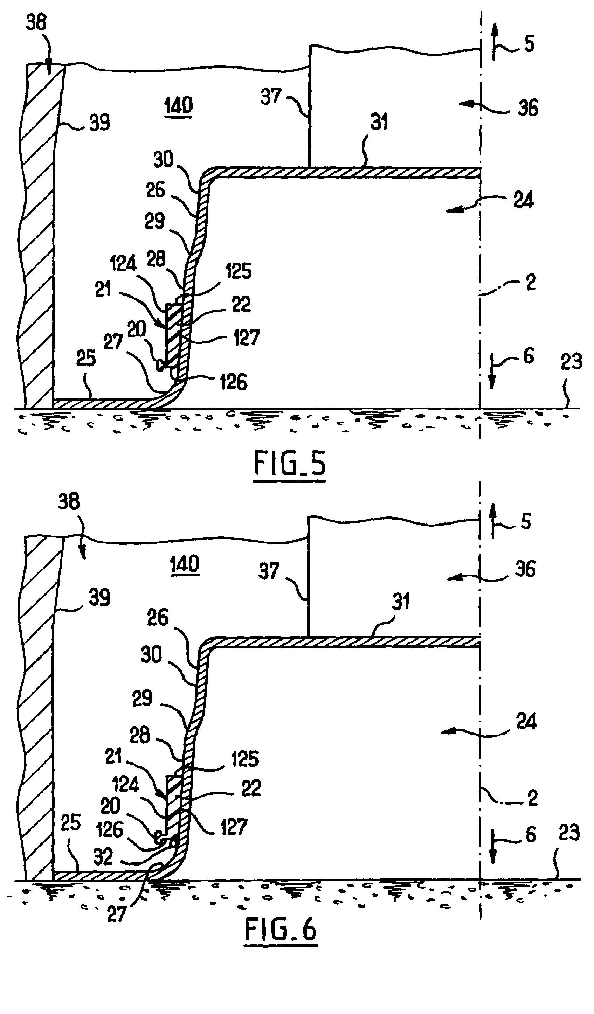

Selon un mode de mise en oeuvre préféré de ce procédé, qui va être décrit à présent en référence à la figure 5 et, dans des variantes, en référence aux figures 6 à 9, on utilise un matériel conventionnel, connu d'un Homme du métier, pour réaliser le tuyau 1 dans une position dans laquelle son axe 2 est vertical et son about femelle 7 tourné vers le bas.

A cet effet, on dépose sur une surface horizontale 23 de support un anneau de coffrage 24 de type connu, convexe vers le haut, présentant une forme générale de révolution autour de l'axe 2 et complémentaire de celle des faces 8, 9 et 14 de l'about femelle à réaliser.

Plus précisément, cet anneau 24 présente vers le haut, dans un sens qui correspond au sens 5 pour le tuyau à réaliser, une face annulaire, transversale 25, tournée dans le sens 5 et présentant une forme étroitement complémentaire de celle de la face frontale 14 à réaliser.

Vers l'axe 2, la face 25 se raccorde à une face périphérique extérieure 26, longitudinale, de l'anneau 24, laquelle est tournée dans le sens d'un éloignement par rapport à l'axe 2, forme une saillie dans le sens 5 par rapport à la face 25 et présente une forme étroitement complémentaire de celle de la face périphérique intérieure à réaliser. Plus précisément, cette face 26 présente des tronçons 27, 28, 29, 30 qui se succèdent dans cet ordre, dans le sens 5, à partir de son raccordement avec la face 25 et qui sont respectivement complémentaires des tronçons 13, 12, 11, 10 de la face périphérique intérieure 9; en ce qui concerne plus particulièrement le tronçon 28, celui-ci est étroitement complémentaire du tronçon 12, abstraction faite de la gorge 15, c'est-à-dire qu'il est notamment complémentaire du prolongement géométrique 23 du tronçon 12.

Dans le sens 5, la face périphérique extérieure 26 se raccorde à une face plane 31 perpendiculaire à l'axe 2, tournée dans le sens 5 et complémentaire de la face 8 dans la zone de cette face 31 la plus éloignée de l'axe 2, c'est-à-dire dans sa zone annulaire la plus proche de son raccordement avec la face périphérique extérieure 26.

Pour mettre en oeuvre le procédé selon l'invention, dans le but de réaliser le tuyau selon l'invention qui est illustré à la figure 1, on emboîte sur le tronçon 28 de la face périphérique extérieure 26 de l'anneau 24 le joint 21 présentant sa position de repos, de telle sorte que sa face 127 épouse la zone du tronçon 28 la plus proche, longitudinalement, du tronçon 27 et que sa partie 20 soit placée en saillie, transversalement, par rapport à sa partie 22, à l'opposé du tronçon 28, c'est-à-dire dans le sens d'un éloignement par rapport à celui-ci et par rapport à l'axe 2, dans la zone du joint 21 la plus proche, longitudinalement, de la face frontale 25.

Lors de cet emboîtement du joint 21, on prend soin de l'immobiliser sur le tronçon 28 dans une position qui correspond exactement à celle de la gorge 15 à réaliser tout en préservant la possibilité de le séparer ensuite de ce tronçon 28, lors du démoulage, par une translation dans le sens 5 par rapport à ce tronçon 28..

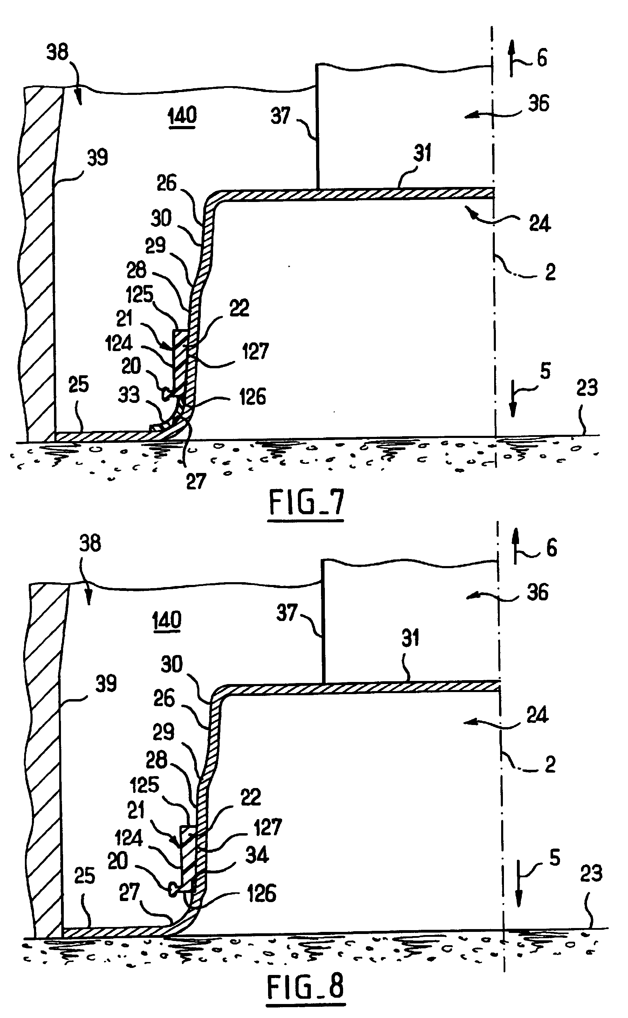

Divers moyens peuvent être utilisés pour assurer cette immobilisation précise et provisoire du joint 21, parmi lesquels on peut citer:
- un simple emboîtement mutuel, accompagné éventuellement d'une légère mise du joint 21 en contrainte élastique de traction circonférentielle, cet emboîtement prenant en compte le léger évasement du tronçon 28 et, complémentairement, de la face 127 du joint 21 dans le sens 6, ce qui correspond au mode de réalisation illustré à la figure 5,
- ou encore un collage mutuel au moyen d'une colle dite "repositionnable" permettant une séparation ultérieure aisée,
- ou encore l'emboîtement sur le tronçon 28, avant le joint 21, d'un anneau métallique 32 que l'on vient ainsi positionner à la jonction entre les tronçons 28 et 27 et qui servira ensuite de butée au joint 21 dans le sens 6, comme on l'a illustré à la figure 6,
- ou encore le collage, de préférence définitif, sur le tronçon 27, d'une bague de caoutchouc 33 que l'on a illustrée à la figure 7 et qui sert de butée au même titre que l'anneau 32 mais qui est destinée à rester définitivement en place sur l'anneau de coffrage 24 alors que l'anneau 32 est destiné à s'en dégager lors du démoulage du tuyau,
- ou encore la présence d'un épaulement 34, annulaire de révolution autour de l'axe 2, aménagé par usinage ou repoussage, dans le tronçon 28 à la jonction de celui-ci avec le tronçon 27, cet épaulement 34 étant tourné dans le sens 5 pour jouer le même rôle de butée pour le joint 21, comme on l'a illustré à la figure 8.

On peut également, comme on l'a illustré à la figure 9, réaliser le joint 21 de telle sorte qu'il présente, en une seule pièce, un prolongement longitudinal 35 à l'opposé de sa partie 22 par rapport à sa partie 20, ce prolongement étant conformé de façon à venir épouser le tronçon 27 par le flanc 126 alors convexe et former ainsi la butée d'immobilisation du joint 21 en position longitudinale sur l'anneau de coffrage 24. Dans ce cas, la gorge 15 de réception du joint 21 en position de repos présente une forme légèrement différente de celle qui a été décrite en référence aux figures 1 et 2 en ce sens qu'elle se prolonge longitudinalement, par son fond 16, au-delà de la rainure 19 jusqu'au tronçon 13 de la face périphérique intérieure 9 de l'about femelle 7, et qu'elle est démunie du flanc 18, comme le comprendra aisément un Homme du métier. Avantageusement, alors, on facilite la flexion ultérieure du joint 21 en vue du passage de sa partie 22 à la position active en aménageant dans sa face 127 une entaille 128, annulaire de révolution autour de l'axe 2 et présentant par exemple une section en V, transversalement à l'opposé de la partie 20 du joint 21; cette entaille 128 est ainsi placée directement en regard de la jonction entre les tronçons 27 et 28 dans la position du joint 21 illustrée à la figure 9.

Ensuite, de façon connue en elle-même, on peut déposer sur la face 31, coaxialement, un mandrin de moulage 36 délimité, dans le sens d'un éloignement par rapport à l'axe 2, par une face périphérique extérieure 37 cylindrique de révolution autour de cet axe 2 avec un diamètre identique à celui de la face 4 à réaliser. Par ailleurs, on dépose sur la surface 23, autour de l'anneau 24, un coffrage 38 présentant vers l'axe 2, autour de l'anneau 24 et du mandrin 36, une face périphérique intérieure 39 présentant une forme de révolution autour de l'axe 2, complémentaire de celle d'une face périphérique extérieure 40 du tuyau 1 à réaliser; la forme de cette face 40 étant indifférente au regard de la présente invention, elle ne sera pas décrite davantage, de même que la forme de la face 39.

Le mandrin 36 et le coffrage 38 délimitent ainsi, par leurs faces 37 et 39, avec les faces 25 et 26 de l'anneau 24 et avec une zone annulaire de sa face 31, adjacente à la face 26, une empreinte de moulage 140 de forme étroitement complémentaire de celle du tuyau 1 à réaliser dans l'état intermédiaire de celui-ci illustré à la figure 2, et dans laquelle le joint 21, en position de repos, occupe une position correspondant à sa position définitive par rapport au tuyau 1 à réaliser, du moins dans cet état intermédiaire de celui-ci. Le cas échéant, en partie supérieure, le coffrage 38 peut être complété pour conformer de façon appropriée l'about mâle du tuyau.

Alors, on coule un béton à l'état fluide dans l'empreinte 140 jusqu'à emplir celle-ci et ce béton à l'état fluide noie le joint 21 en épousant étroitement les faces 124, 125, 126 de la partie d'étanchéité 22 ainsi que la partie d'ancrage 20, en laissant toutefois dégagée la face 127, épousant étroitement le tronçon 28 de la face 26 de l'anneau de coffrage 24; dans le cas du mode de mise en oeuvre illustré à la figure 9, la face 126 et l'entaille 128 restent également dégagées du béton.

Avantageusement, le moule constitué par l'anneau 24, le mandrin 36 et le coffrage 38 est vibré au cours de l'introduction du béton, et l'on utilise un béton relativement sec, offrant rapidement une cohésion suffisante pour que l'ensemble formé par le béton et le joint 27, reposant sur l'anneau 24, présente une stabilité de forme telle que l'on puisse rapidement ôter le mandrin 36 et le coffrage 28, puis laisser le béton terminer sa prise et le cas échéant provoquer cette prise alors que l'ensemble précité repose en position verticale sur l'anneau 24, que l'on ôte ensuite.

Après avoir enlevé également l'anneau 24, on obtient l'ensemble 41 illustré à la figure 2, lequel est formé du fût 3 constitué par le béton moulé et du joint 21 en position de repos, ancré de façon définitive, par sa partie 20, dans la rainure 19 que cette partie 20 a elle-même ménagée dans le béton lors de la coulée de celui-ci, et intégralement logé dans la gorge 15 que sa partie 22 a ménagée dans le béton lors de la coulée de celui-ci.

Si le joint 21 a été mis en légère contrainte élastique de traction circonférentielle sur l'anneau de calage, il tend alors à se dégager de la gorge 15 en se rétrécissant dans le sens 5, par pivotement de la partie 22, qui tend à se rétrécir par rapport à sa partie 20, quant à elle à présent prisonnière de la rainure 19, mais la partie 22 reste néanmoins logée au moins pour l'essentiel dans la gorge 15 si bien que l'on négligera cette tendance par la suite.

La phase suivante du procédé de réalisation du tuyau 1, qui va être décrite à présent, peut être ensuite mise en oeuvre soit immédiatement, soit avant l'envoi sur un chantier de pose du tuyau 1, soit au moment de la pose du tuyau 1, auquel cas c'est l'ensemble 41 qui vient d'être décrit qui est stocké, le cas échéant transporté et manutentionné, avec un risque minime d'endommagement du joint 21 qui reste dans sa position de repos, dans laquelle sa face 127 affleure simplement le prolongement géométrique 23 du tronçon 12 de la face périphérique intérieure 9 de l'about femelle 7.

Cette phase suivante du procédé, illustrée à la figure 1, consiste à dégager de la gorge 15 à la partie 22 du joint 21, par déformation élastique de celui-ci et, notamment, pivotement de sa partie d'étanchéité 22 vers l'axe 2 par rapport à la partie d'ancrage 20, de telle sorte que cette partie 22 forme une saillie vers l'axe 2, hors de la gorge 15, par rapport au prolongement géométrique 23 du tronçon 12. A cet effet, on peut utiliser un outil approprié, non illustré, au moyen duquel on exerce un effet de levier sur la partie 22 du joint 21, au niveau de la face 125. On peut également prévoir, en complément ou à la place d'un tel outil, des moyens pour faciliter cette extraction de la partie 22 du joint 21 hors de la gorge 15, par exemple sous forme d'un cordon ou d'un ruban accolé aux faces 124 et 125 de la partie 22 du joint de façon à s'intercaler lors du moulage entre ces faces et, respectivement, le fond 16 et le flanc 17 de la gorge 15 et présentant une extrémité libre hors de la gorge 15; cette extrémité peut être par exemple interposée au moulage entre la face 127 de la partie 22 du joint 21 et le tronçon 28 de face périphérique extérieure de l'anneau de coffrage 24 de façon à ne pas être prise dans le béton, de telle sorte que l'on puisse lui appliquer une traction dans le sens de la partie 22 du joint 21 hors de la gorge 15 après le démoulage.

On peut ainsi amener le joint 21 jusqu'à une position active, c'est-à-dire une position dans laquelle il est susceptible de venir en appui d'étanchéité contre une face périphérique antagoniste d'un about mâle, dans des conditions qui seront décrites en référence à la figure 10. Dans cette position, les faces 124 et 127 du joint 21 présentent une forme tronconique de révolution autour de l'axe 2 et convergent dans le sens 5, c'est-à-dire font saillie vers l'axe 2 par rapport au prolongement géométrique 23 du tronçon 12 en s'éloignant progressivement de ce prolongement géométrique dans le sens 5, comme il est illustré à la figure 1, et la partie 22 du joint 21 présente à l'opposé de la partie d'ancrage 20 dans le sens 5 un bord libre 42, à la jonction des faces 125 et 127, lequel bord libre 42 constitue la zone du joint 21 alors la plus proche de l'axe 2 pour établir l'appui d'étanchéité précité.

Conformément à la présente invention, pour tendre à maintenir élastiquement le joint 21 dans cette position active, on emboîte entre sa face 24, d'une part, le fond 16 et le flanc 17 de la gorge 15, d'autre part, un anneau de calage 43 élastiquement compressible, transversal, annulaire de révolution autour de l'axe 2.

En vue de s'ancrer fermement à l'intérieur de la gorge 15, l'anneau 43 comporte, par réalisation en une seule pièce, un talon 44 qui, respectivement dans le sens 5 et dans le sens d'un éloignement par rapport à l'axe 2, est délimité par une face annulaire 45 transversale, de révolution autour de l'axe 2, présentant une forme sensiblement complémentaire de celle du flanc 17 de la gorge 15 ou, au moins, susceptible de prendre aisément une telle forme du fait de la compressibilité élastique du talon 44, et par une face périphérique 46 cylindrique de révolution autour de l'axe 2 avec un diamètre identique à celui du fond 16, de façon à épouser respectivement la face 17 et le fond 16.

La face 46 du talon 44 s'étend, dans le sens 6, jusqu'à proximité immédiate de la rainure 19, au niveau de laquelle elle se raccorde à une face 47 tronconique de révolution autour de l'axe 2, convergente dans le sens 5 et tournée à la fois dans le sens 6 et vers l'axe 2 avec une inclinaison identique à celle de la face 124 du joint 121 en position active de façon à servir d'appui, dans le sens 5 et dans le sens d'un éloignement par rapport à l'axe 2, à cette face 124 du joint 21 en position active, comme on l'a illustré à la figure 1.

Le contact entre les faces 124 et 47 est intime, de façon à assurer une répartition de la pression d'appui de la partie 22 du joint 21 sur l'anneau de calage 43. En fonction d'un effet recherché :
- ces surfaces peuvent être lisses ou au contraire être rendues rugueuses de façon à augmenter la friction entre elles,
- on peut rendre ces faces mutuellement solidaires par exemple en les munissant de reliefs et/ou creux mutuellement complémentaires ou de tout autre moyen d'ancrage mutuel,
- on peut encore les coller entre elles.

On peut également coller l'anneau 43 par sa face 45 et/ou sa face 46 sur le flanc 17 et/ou le fond 16 de la gorge 15 pour l'empêcher de s'échapper une fois mis en place mais, de préférence, sa retenue dans la gorge 15 par son talon 44 résulte du seul emboîtement mutuel.

De préférence, l'anneau 43, considéré dans un état d'absence de contrainte élastique ou de repos, tel qu'il est illustré à la figure 4, est dimensionné de telle sorte que sa face 47 s'étende vers l'axe 2 au-delà du prolongement géométrique 23 du tronçon 12 de la face périphérique intérieure 9 de l'about femelle 7, c'est à dire offre à la face 124 un appui sur la majeure partie de la surface de cette face 124, comme illustré à la figure 1.

Dans le sens d'un rapprochement vis-à-vis de l'axe 2, la face 47 se termine avantageusement par une arête 48 circulaire, centrée sur l'axe 2 et transversale par rapport à lui, laquelle arête 48 matérialise la limite de l'anneau 43 dans le sens d'un rapprochement par rapport à l'axe 2, c'est-à-dire la saillie maximale de celui-ci par rapport au prolongement géométrique 23 du tronçon 12 dans l'exemple illustré, ainsi que la limite de l'appui mutuel des faces 124 et 47.

Dans l'exemple illustré, l'arête 43 est ainsi située beaucoup plus près de la jonction entre les faces 125 et 127 de la partie d'étanchéité 22 du joint 21 que de la partie d'ancrage 20 de celui-ci; ceci ne constitue toutefois qu'un exemple non limitatif et en fonction de l'effet recherché sur la partie 22 du joint 21, cette arête 48 pourrait se trouver dans toute position entre la jonction mutuelle des faces 124 et 125 de la partie 22 du joint 21 et l'intérieur de la gorge 15.

Par l'arête 48, la face 47 de l'anneau 43 se raccorde à une face 49 de celui-d, laquelle est tronconique de révolution autour de l'axe 2 avec une obliquité inverse de celle de la face 47, dans l'exemple illustré, et relie l'arête 48 à la face 45, à laquelle cette face 49 se raccorde au niveau du prolongement géométrique 23 du tronçon 12 de la face périphérique intérieure 9 de l'about femelle 7.

A titre d'exemple non limitatif, dans une section de l'anneau de calage 43, considéré au repos, par un quelconque plan incluant l'axe 2, comme on l'a illustré à la figure 4, l'angle aigu α que forment entre elles les faces 47 et 46 de l'anneau 43 peut être de l'ordre de 40° et l'angle β que forment entre elles les faces 47 et 49, autour de l'arête 48, peut être de l'ordre de 90°, mais ces chiffres ne sont indiqués qu'à titre d'exemple non limitatif.

De même, les formes respectives du joint 21 et de l'anneau de calage 43, en position respective de repos, et la forme correspondante de la gorge 15 ne constituent que des exemples non limitatifs par rapport auxquels on peut prévoir de nombreuses variantes dès lors que ces formes sont propres à assurer un affleurement du joint 21 par rapport au tronçon 12 de la face périphérique intérieure 9 de l'about femelle 7 en position de repos et l'insertion puis la retenue solidaire de l'anneau de calage 43 dans la gorge 15 pour retenir élastiquement le joint 21 dans la position active dans laquelle, au contraire, il fait saillie vers l'axe 2 par rapport au prolongement géométrique 23 du tronçon 12 de face périphérique intérieure.

Les matériaux constitutifs respectifs du joint 21 et de l'anneau de calage 43 peuvent être également choisis dans une large gamme de possibilités, d'une part en termes de dureté de ces matériaux et d'autre part en termes de nature de ces mêmes matériaux.

A titre d'exemple non limitatif, on a obtenu de bons résultats aux essais avec un joint 21 présentant une dureté choisie entre 35 et 55°DIDC, de préférence de l'ordre de 45°DIDC, et en choisissant comme matériau constitutif du joint 21 un matériau élastomère choisi dans un groupe comportant l'éthylène- propylène- diène- monomère et le caoutchouc styrène- butadiène, revêtu provisoirement d'une cire de protection contre les rayonnements ultraviolets, et en choisissant le même matériau, dans la même dureté, pour l'anneau de calage 43. Cependant, on pourrait également prévoir des matériaux différents pour le joint 21 et l'anneau de calage 43, ainsi que des duretés différentes, l'anneau de calage 43 pouvant ainsi présenter une dureté supérieure ou inférieure à celle du joint 21, sans que l'on sorte pour autant du cadre de la présente invention. En outre, le matériau choisi pour le joint 21 et/ou l'anneau de calage 43 pourrait être autre qu'un élastomère, et par exemple une matière thermoplastique non élastomère.

En outre, en complément ou en remplacement de l'équipement d'un about femelle 7 d'un tuyau 1 au moyen d'un joint 21 et d'un anneau de calage 43 conformément à la présente invention, on peut prévoir d'équiper d'un tel joint et d'un tel anneau de calage un about mâle d'un tel tuyau, comme on l'a illustré à la figure 10 qui, plus précisément, illustre la coopération entre l'about femelle 7 du tuyau selon l'invention 1 qui a été décrit en référence à la figure 1 notamment et un about mâle 50 d'un autre tuyau 51, également conforme à la présente invention et emboîté sensiblement coaxialement, par cet about mâle 51, dans l'about femelle 7 du tuyau 1 pour constituer une canalisation étanche 52.

Vers l'axe 2, le tuyau 51, y compris au niveau de son about mâle 50, présente une face périphérique intérieure 53 cylindrique de révolution autour de l'axe 2 avec un diamètre identique à celui de la face périphérique intérieure 4 du tuyau 1 et, dans le sens 5, cette face périphérique intérieure 53 se raccorde à une face frontale extrême 54 transversale, plane, annulaire de révolution autour de l'axe 2 auquel elle est perpendiculaire. Cette face 54, tournée dans le sens 5, se raccorde dans le sens d'un éloignement par rapport à l'axe 2 à une face périphérique extérieure 55 de l'about mâle 50, laquelle est tournée dans le sens d'un éloignement par rapport à l'axe 2 et présente, à partir de son raccordement avec la face frontale 54, deux tronçons 56, 57 qui se succèdent dans le sens 6. Le tronçon 56 est tronconique de révolution autour de l'axe 2, dont il s'éloigne dans le sens 6, et ne représente qu'une partie minime de la dimension longitudinale de la face 55. Le tronçon 57, pratiquement cylindrique de révolution autour de l'axe 2 mais s'évasant cependant légèrement dans le sens 6 pour des raisons de fabrication par moulage, représente quant à lui la majeure partie de la dimension longitudinale de la face 55 et se raccorde dans le sens 6 à un troisième tronçon 58 de la face périphérique extérieure 55 de l'about mâle 20, lequel tronçon 58 est concave et s'éloigne progressivement de l'axe 2 dans le sens 6, jusqu'à se raccorder à une face périphérique extérieure 59, par exemple identique à la face périphérique extérieure 40 du tuyau 1.

De façon connue en elle-même, les abouts femelle 7 et mâle 50 sont dimensionnés, longitudinalement et transversalement à l'axe 2, de telle sorte que l'on puisse les emboîter mutuellement, dans une relation de coaxialité au moins approximative, jusqu'à une position qui est illustrée à la figure 10 et dans laquelle la face 54 est située longitudinalement en regard de la face 8 en préservant toutefois un jeu vis-à-vis de celle-ci, le tronçon 56 de la face 55 est placé transversalement en regard du tronçon 10 de la face 9 en respectant toutefois un jeu vis-à-vis de cette dernière, le tronçon 57 est placé transversalement en regard du tronçon 12 sans contact avec celui-ci, et le tronçon 58 est placé transversalement et longitudinalement en regard du tronçon 13 mais sans contact avec celui-ci. Cependant, dans cette position d'emboîtement mutuel, le bord libre 42 de la partie 22 du joint 21 est en appui, vers l'axe 2, sur une zone du tronçon 55 de la face 57 qui est longitudinalement la plus proche du tronçon 58, et cet appui se traduit par un fléchissement élastique de la partie 22 du joint 21 dans le sens d'un éloignement par rapport à l'axe 2, et par une mise de l'anneau 43 en contrainte de compression élastique entre la partie 22 du joint 21, d'une part, le flanc 17 et le fond 16 de la gorge 15, d'autre part, ce qui établit entre le bord libre 42 et le tronçon 55 de la face périphérique extérieure 57 une contrainte d'appui propre à créer l'étanchéité à ce niveau.

Cette étanchéité serait établie au même titre si, au lieu d'être réalisé conformément à la présente invention, l'about mâle 50 du tuyau 51 était dépourvu de tout moyen d'étanchéité.

Cependant, dans l'exemple illustré, l'about mâle 50 est également réalisé conformément à la présente invention et présente, d'une façon qui ne sera pas détaillée mais pourrait être aisément déduite, par un homme du métier, de la description de l'about femelle 7, une gorge 60, annulaire de révolution autour de l'axe 2, aménagée dans le tronçon 55 à proximité immédiate du raccordement de celui-ci avec le tronçon 56 et présentant, lorsqu'elle est vue en coupe par un plan incluant l'axe 2, une section qui peut être identique à celle de la gorge 15 qui a été précédemment décrite, y compris quant à l'aménagement, dans la zone de cette gorge 60 qui est la plus proche, longitudinalement, de la face frontale 54, d'une rainure 61, annulaire de révolution autour de l'axe 2, présentant lorsqu'elle est vue en coupe par un plan incluant cet axe une section en queue d'aronde ou toute autre section propre à y permettre l'ancrage permanent d'un joint 62 en tout point comparable au joint 21.

A cet effet, ce joint 62, comme le joint 21, présente une partie 63 d'ancrage dans la rainure 61, épousant étroitement celle-ci qu'elle ménage avantageusement dans le béton constitutif de l'about mâle 50 lors du moulage de celui-ci, et une partie d'étanchéité 64 susceptible d'occuper une position de repos, non illustrée, dans laquelle elle s'intègre totalement à la gorge 60 en affleurant le prolongement géométrique 65 du tronçon 55, la partie d'étanchéité 64 en position de repos étant avantageusement utilisée lors du moulage du béton pour conformer complémentairement la gorge 60.

Comme la partie d'étanchéité 22 du joint 21, la partie d'étanchéité 64 du joint 62 est cependant placée dans une position active, dans laquelle elle fait saillie en sens d'un éloignement par rapport à l'axe 2, par rapport au prolongement géométrique 65 du tronçon 55, par insertion, pour partie dans la gorge 60, d'un anneau de calage 66 lui offrant un appui dans le sens 6 dans cette position active, et en tout point comparable à l'anneau de calage 43.

Dans le cas où l'about mâle 50 coopère avec un about femelle 7 ne comportant ni joint 21, ni anneau de calage 43 pour celui-ci, c'est-à-dire avec un about femelle 7 ne comportant aucune disposition d'étanchéité conforme à la présente invention, l'organe de calage 66 retient la partie d'étanchéité 64 du joint 62 en appui d'étanchéité, dans le sens d'un éloignement par rapport à l'axe 2, contre le tronçon 12 de la face périphérique intérieure 9 de l'about femelle 7, moyennant un fléchissement de cette partie d'étanchéité 64 dans le sens d'un rapprochement par rapport à l'axe 2, accompagné d'un effet de compression élastique de l'anneau de calage 66 par la partie d'étanchéité 64 du joint 62, vers l'intérieur de la gorge 60.

Lorsque, comme il est illustré à la figure 10, les deux tuyaux 1 et 51 sont réalisés conformément à la présente invention, en ce qui concerne respectivement leur about femelle 7 et leur about mâle 50, le joint 64 sollicité par l'anneau de calage 66 prend appui, de la même façon, sur le tronçon 12 de la face périphérique intérieure 9 de l'about femelle 7, mais les deux abouts 7 et 50 sont dimensionnés longitudinalement de telle sorte que le joint 64 et son anneau de calage 66 soient alors décalés dans le sens 5 par rapport au joint 21 et à son anneau de calage 43, c'est-à-dire pour que le joint 64 s'appuie sur le tronçon 12 entre la gorge 15 et le tronçon 11.

Compte tenu de la flexibilité des joints 21 et 64 et de la compressibilité élastique des anneaux de calage 43 et 66, la mise en place de ces derniers sur l'about respectif avant l'emboîtement mutuel des deux abouts ne constitue pas d'obstacle à ce que, lors de cet emboîtement mutuel, les joints et les anneaux de calage parviennent dans la position relative correspondante.

Un Homme du métier comprendra aisément qu'ainsi peut se créer entre les parties d'étanchéité 64 et 22 des joints d'étanchéité 62 et 21 et/ou entre les anneaux de calage 43 et 66, par les parties de ces derniers en saillie hors de la gorge respectivement associé, un effet de butée longitudinale à l'encontre d'une extraction de l'about mâle 50 hors de l'about femelle 7, cet effet étant suffisant pour éviter une telle extraction accidentelle lors de la pose d'une canalisation 52, étant entendu que les risques d'une telle extraction n'existent ensuite pratiquement plus.

On pourrait prévoir, dans une variante de mise en oeuvre non représentée, mais aisément déductible des modes de mise en oeuvre représentés et décrits, que le ou chaque anneau de calage 43, 66, alors étanche, complète l'étanchéité assurée par le joint 21, 62 correspondant en prenant également appui, en contrainte élastique, dans ce cas de compression, respectivement sur la face périphérique 55 ou 9, ou encore se substitue totalement au joint 21, 62 dans cette fonction d'étanchéité en prenant appui seul, en contrainte élastique de compression, respectivement sur la face périphérique 55 ou 9. Le joint 21, 62 constituerait alors simplement un moyen commode de réaliser gorge 15 ou 60 à la coulée au béton, de protéger cette gorge de toute pénétration de poussière ou de cailloux avant la mise en place de l'anneau 43, 66, puis de protéger ce dernier contre les agressions mécaniques. Naturellement, la saillie maximale que l'anneau 43, 66 forme transversalement par rapport au prolongement géométrique 23, 65 du tronçon 12, 55 de face périphérique devrait être supérieure à celle que forme le joint 21, 62 en position active pour permettre l'appui d'étanchéité de l'anneau 43, 66 contre la face périphérique 55 ou 9.

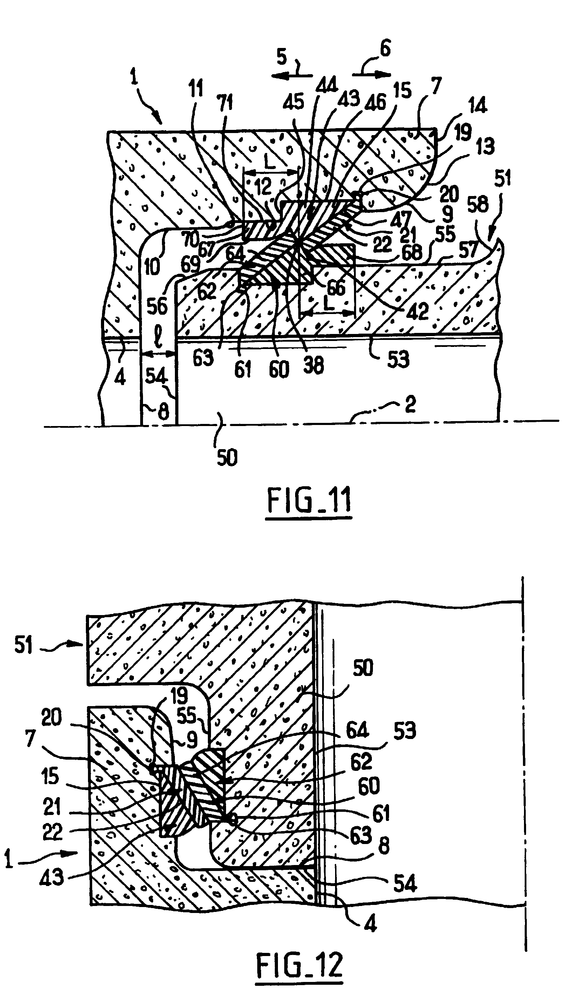

La figure 11 illustre un mode de mise en oeuvre de l'invention dans lequel, ainsi, les anneaux de calage 43, 46, réalisés sous forme étanche, jouent un rôle dans l'étanchéité et dans lequel, par contre, les joints 21, 62, également réalisés sous forme étanche, conservent un rôle dans cette étanchéité.

On retrouve sous les mêmes références qu'à la figure 10 les composants ou parties de composants décrits à propos de cette figure 10, à l'identique si ce n'est que le contact d'étanchéité ne s'établit plus entre chaque joint 21, 62 d'un tuyau 1, 51 et la face périphérique 55, 9 de l'autre tuyau 51, 1, mais entre chaque joint 21, 62 et l'anneau de calage 66, 43 associé à l'autre joint 62, 21.

A cet effet, la face 49 de l'anneau de calage 43 et la face correspondante de l'anneau de calage 66 sont modifiées en comparaison de ce qui a été décrit notamment en référence à la figure 4, de telle sorte que chaque anneau de calage 43, 66 présente un prolongement longitudinal 67, 68, respectivement dans le sens 5 et dans le sens 6, sur lequel le joint 62, 21 peut ainsi prendre appui respectivement dans le sens d'un éloignement par rapport à l'axe 2 et dans le sens d'un rapprochement par rapport à celui-ci moyennant un fléchissement élastique des deux joints 62, 21 et une compression élastique des deux anneaux de calage 66, 43, dans des conditions propres à assurer une étanchéité relative. On remarquera que l'on conserve dans ce cas l'effet de butée longitudinale à l'encontre d'une extraction de l'about mâle 50 hors de l'about femelle 7, décrit en référence à la figure 10; une tentative dans ce sens se traduirait en effet par un arcboutement des deux joints 21 et 62.

Par exemple, le prolongement longitudinal 67 de l'anneau de calage 43 dans le sens 5 est délimité, à partir de l'arête 38 dans le sens 5, par une face périphérique intérieure 69 servant d'appui d'étanchéité au joint 62 et présentant une forme cylindrique de révolution autour de l'axe 2 en l'absence de contrainte de compression élastique appliquée par exemple par ce joint. Dans le sens 5, cette face périphérique intérieure 69 se raccorde à une face annulaire plane 70, tournée dans le sens 5 et présentant une forme annulaire de révolution autour de l'axe 2, auquel cette face 70 est perpendiculaire. La face 70 relie ainsi la face périphérique intérieure 69 du prolongement 67 de l'anneau de calage 43 à une face périphérique extérieure 71 de ce prolongement, laquelle est approximativement cylindrique de révolution autour de l'axe 2 avec un diamètre tel que, par élasticité, elle épouse le tronçon 12 de la face périphérique intérieure de l'about femelle 7 entre la gorge 15 et le tronçon 11, et se raccorde à la face 45 de l'anneau de calage 43 dans le sens 6. Le prolongement longitudinal 68 de l'anneau de calage 66 présente une conformation similaire, pour servir d'appui d'étanchéité au joint 21.

Longitudinalement, chacun des prolongements 67 et 68 présente, au niveau de sa face telle que 69, une dimension L au moins égale, et de préférence supérieure, à celle du débattement longitudinal possible entre les tuyaux ou analogues 1, 51 après leur pose, à savoir à celle I des distances séparant respectivement les faces 54 et 8 et les tronçons 58 et 13 qui est la plus faible.

Selon un autre mode de mise en oeuvre, de l'invention illustré schématiquement à la figure 12 où l'on retrouve les mêmes références qu'à la figure 10 pour désigner des composants correspondants ou des parties correspondantes de composants en dépit de quelques différences de forme, sans incidence sur la présente invention, on pourrait également prévoir qu'un contact d'étanchéité s'établisse entre les parties d'étanchéité respectives 64 et 22 des joints d'étanchéité 62 et 21, par exemple dans le cas où, au lieu d'être des tuyaux 1 et 51, les produits réalisés conformément à la présente invention seraient destinés à occuper des positions relatives bien définies lors de l'emboîtement mutuel, par exemple par butée mutuelle des faces 54 et 8 suivant l'axe 2, comme ce peut être le cas d'éléments de regard superposés verticalement, cet exemple ne devant être en aucune façon considéré comme limitatif.

De façon générale, le mode de mise en oeuvre de l'invention qui vient d'être décrit ne constitue qu'un exemple non limitatif, par rapport auquel on pourra prévoir de nombreuses variantes sans sortir pour autant du cadre de cette invention. Il est bien entendu que, en fonction des applications auxquelles seront destinés les tuyaux ou analogues réalisés conformément à la présente invention, des matériaux autres qu'un béton, en particulier d'un béton relativement sec, pourront être utilisés pour réaliser les composants rigides de ces tuyaux ou analogues, et par exemple d'autres types de béton ou plus généralement d'autres matériaux durcissables se présentant initialement à l'état fluide, se prêtant aussi bien à une insertion du joint tel que 21 ou 62 directement par surmoulage. On pourrait également choisir d'insérer solidairement les joints tels que 21 et 62 dans le composant rigide des tuyaux ou analogues alors que ce composant est déjà rigide, et notamment réalisé dans un matériau autre qu'un matériau durcissable se présentant initialement à l'état fluide, c'est-à-dire dans un matériau tel que les conditions de moulage ne se prêtent pas à une intégration directe des joints tels que 21 et 62, comme ce peut être le cas lorsque les tuyaux ou analogues conformes à la présente invention sont par exemple métalliques et fabriqués par moulage à des températures qui risqueraient d'entraîner la détérioration des joints.

## Revendications

1. Tuyau ou analogue, notamment en béton, du type comportant:
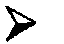 au moins un about tubulaire (7, 50) d'axe longitudinal (2) déterminé, destiné à s'emboîter longitudinalement avec un about tubulaire (50, 7), approximativement coaxial, d'un autre tuyau ou analogue (51, 1) et présentant à cet effet une face annulaire frontale, transversale, d'extrémité (14, 54) et une face périphérique longitudinale d'étanchéité (9, 55) placée en retrait, longitudinalement, par rapport à la face frontale (14, 54) et destinée à venir alors se placer en regard, transversalement, d'une face périphérique longitudinale (55, 9), antagoniste, de l'about (50, 7) de l'autre tuyau ou analogue (51, 1), la face périphérique d'étanchéité (9, 55) comportant une gorge annulaire transversale (15, 60) de réception de moyens (21, 43, 62, 66) d'étanchéité vis-à-vis de la face périphérique antagoniste (55, 9),
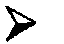 des moyens (21, 43, 62, 66) d'étanchéité vis-à-vis de la face périphérique antagoniste, comportant:
• un premier anneau transversal (21, 62) ancré dans la gorge (15, 60) par une zone du premier anneau (21, 62) et de la gorge (15, 60) constituant la zone respective la plus proche, longitudinalement, de la face frontale (14, 54), le premier anneau (21, 62) étant susceptible de fléchir entre une position de repos dans laquelle il est escamoté dans la gorge (15, 60), par rapport à un prolongement géométrique (23, 65) de la face périphérique d'étanchéité (9, 55), et une position active dans laquelle il fait partiellement saillie transversalement hors de celle-ci, par rapport audit prolongement géométrique (23, 65), en s'éloignant progressivement de celui-ci dans le sens longitudinal (56) d'un éloignement par rapport à la face frontale (14, 54),
• des moyens (43, 66) de sollicitation élastique du premier anneau (21, 62) de sa position de repos vers sa position active,
caractérisé en ce que les moyens (43, 66) de sollicitation élastique du premier anneau (21, 62) comportent un deuxième anneau transversal (43, 66), élastiquement compressible, comportant un talon (44) emboîté dans une zone de la gorge (15, 60) située à l'opposé, longitudinalement, de la face frontale (14, 54) par rapport au premier anneau (21, 62) et présentant au contact de celui-ci une face (47) servant d'appui pour celui-ci à l'opposé, longitudinalement, de la face frontale (14, 54), de telle sorte que le premier anneau (21, 62), en position active, et/ou le deuxième anneau (43, 66) soient susceptibles de venir en appui d'étanchéité contre la face périphérique antagoniste (55, 9), respectivement le premier anneau (21, 62) et/ou le deuxième anneau (43, 66) étant étanches.

2. Tuyau ou analogue selon la revendication 1, caractérisé en ce que la face périphérique d'étanchéité (9, 55) est une face périphérique intérieure d'un about femelle (7).

3. Tuyau ou analogue selon la revendication 1, caractérisé en ce que la face périphérique d'étanchéité (9, 55) est une face périphérique extérieure (9) d'un about mâle (50).

4. Tuyau ou analogue selon l'une quelconque des revendications 1 à 3, caractérisé en ce que la face (47) d'appui pour le premier anneau (21, 62) est inclinée par rapport à l'axe (2) de façon à s'éloigner progressivement du talon (44) dans le sens longitudinal (5, 6) d'un éloignement par rapport à la face frontale (14, 54).

5. Tuyau ou analogue selon la revendication 4, caractérisé en ce que le deuxième anneau (43, 66) présente une arête annulaire transversale (48) bordant la face (47) d'appui pour le premier anneau (21, 62) dans le sens longitudinal (5, 6) d'un éloignement par rapport à la face frontale (14, 54) et constituant la limite du deuxième anneau (43, 66) dans le sens transversal d'un éloignement par rapport au talon (44).

6. Tuyau ou analogue selon l'une quelconque des revendications 1 à 5, caractérisé en ce que le deuxième anneau (43, 66) fait partiellement saillie transversalement hors de la gorge (15, 60), par rapport audit prolongement géométrique (23, 65), la valeur de cette saillie étant au plus égale à celle du premier anneau (21, 62) en position active et au moins le premier anneau (21, 62) étant étanche pour venir en appui d'étanchéité contre la face périphérique antagoniste (55, 9), en position active.

7. Tuyau ou analogue selon les revendications 1 à 5, caractérisé en ce que le deuxième anneau (43, 66) fait partiellement saillie transversalement hors de la gorge (15, 60), par rapport audit prolongement géométrique (23, 65), la valeur de cette saillie étant supérieure à celle du premier anneau (21, 62) en position active, au moins le deuxième anneau (43, 66) étant étanche pour venir en appui d'étanchéité contre la face périphérique antagoniste (55, 9).

8. Tuyau ou analogue selon l'une quelconque des revendications 1 à 7, caractérisé en ce que la gorge (15, 60) et le premier anneau (21, 62), dans sa position de repos, présentent des sections respectives approximativement rectangulaires
et en ce que le talon (44) du deuxième anneau (43, 66) présente à l'opposé, longitudinalement, de la face frontale (7, 54) par rapport à la face d'appui (47) pour le premier anneau (21, 62) une section complémentaire de celle de la gorge (15, 60).

9. Tuyau ou analogue selon l'une quelconque des revendications 1 à 8, caractérisé en ce que le deuxième anneau (43, 66) et le premier anneau (21, 62) présentent la même dureté.

10. Tuyau ou analogue selon l'une quelconque des revendications 1 à 8, caractérisé en ce que le deuxième anneau (43, 66) présente une dureté supérieure à celle du premier anneau (21, 62).

11. Tuyau ou analogue selon l'une quelconque des revendications 1 à 8, caractérisé en ce que le deuxième anneau (43, 66) présente une dureté inférieure à celle du premier anneau (21, 62).

12. Tuyau ou analogue selon l'une quelconque des revendications 1 à 11, caractérisé en ce que le premier anneau (21, 62) présente une dureté de l'ordre de 30 à 55°DIDC, de préférence de 45°DIDC.

13. Tuyau ou analogue selon l'une quelconque des revendications 1 à 12, caractérisé en ce que le premier anneau (21, 62) et/ou le deuxième anneau (43, 66) sont réalisés en un matériau élastomère choisi dans un groupe comportant l'éthylène-propylène-diène-monomère et le caoutchouc styrène-butadiène.

14. Canalisation ou analogue, comportant au moins deux tuyaux ou analogues (1, 51) dont l'un comporte un (1) about tubulaire femelle (7) d'axe longitudinal déterminé (2) et dont l'autre (51) comporte un about tubulaire mâle (50) emboîté approximativement coaxialement dans l'about tubulaire femelle (7),
caractérisé en ce que l'un, au moins, des tuyaux ou analogues (1, 51) est conforme à l'une quelconque des revendications 1 à 13 et porte le premier anneau (21, 62) et le deuxième anneau (43, 66), sollicitant élastiquement le premier anneau (21, 62) vers sa position active, le premier anneau (21, 62) en position active et/ou le deuxième anneau (43, 66) étant étanches et placés en contrainte élastique d'appui d'étanchéité contre la face périphérique antagoniste (55, 9) de l'about (50, 7) de l'autre tuyau ou analogue (51, 1).

15. Canalisation ou analogue, comportant au moins deux tuyaux ou analogues (1, 51) dont l'un comporte un about tubulaire femelle (7) d'axe longitudinal déterminé (2) et dont l'autre (51) comporte un about tubulaire mâle (50) emboîté approximativement coaxialement dans l'about tubulaire femelle (7),
caractérisé en ce que chacun des tuyaux ou analogues (1, 51) est conforme à l'une quelconque des revendications 1 à 13 et porte un exemplaire respectif du premier anneau (21, 62) et du deuxième anneau (43, 66), sollicitant élastiquement le premier anneau (21, 62) vers sa position active, le premier anneau (21, 62) en position active et/ou le deuxième anneau (43, 66) étant placés ainsi en contrainte élastique d'appui d'étanchéité contre la face périphérique d'étanchéité (55, 9) de l'autre tuyau ou analogue (51, 1), faisant office de face périphérique antagoniste (55, 9).

16. Canalisation ou analogue selon la revendication 15, caractérisée en ce que chaque premier anneau (21, 62) et/ou chaque deuxième anneau (43, 66) sont situés à l'opposé, longitudinalement, de la face frontale (54, 14) de l'autre tuyau ou analogue (51, 1) par rapport au premier anneau (62, 21) et au deuxième anneau (66, 43) de cet autre tuyau ou analogue (51, 1).

17. Canalisation ou analogue, comportant au moins deux tuyaux ou analogues (1, 51) dont l'un (1) comporte un about tubulaire femelle d'axe longitudinal déterminé (2) et dont l'autre (51) comporte un about mâle emboîté approximativement coaxialement dans l'about tubulaire femelle 7,
caractérisé en ce que chacun des tuyaux ou analogues (1, 51) est conforme à l'une quelconque des revendications 1 à 13 et porte un exemplaire respectif du premier anneau (21, 62) du deuxième anneau (43, 66),
en ce que chaque premier anneau (21, 62) est situé à l'opposé, longitudinalement, de la face frontale (54, 8) de l'autre tuyau ou analogue (51, 1) par rapport au premier anneau (66, 43) de cet autre tuyau ou analogue (51, 1)
et en ce que chaque deuxième anneau (43, 66), sollicitant élastiquement le premier anneau correspondant (21, 62) vers sa position active, le retient ainsi en contrainte élastique d'appui d'étanchéité contre une face périphérique du deuxième anneau (43, 66) de l'autre tuyau ou analogue (51, 1), faisant office de face périphérique antagoniste, chacun des premiers anneaux et des seconds anneaux étant étanche à cet effet.

18. Canalisation ou analogue, comportant au moins deux tuyaux ou analogues (1, 51) dont l'un (1) comporte un about tubulaire femelle d'axe longitudinal déterminé (2) et dont l'autre (51) comporte un about mâle emboîté approximativement coaxialement dans l'about tubulaire femelle (7),
caractérisé en ce que chacun des tuyaux ou analogues (1, 51) est conforme à l'une quelconque des revendications 1 à 13 et porte un exemplaire respectif du premier anneau (21, 62) et du deuxième anneau (43, 66),
en ce que chaque premier anneau (21, 62) est situé en regard, transversalement, du premier anneau (21, 62) de l'autre tuyau ou analogue (51, 1),
et en ce que chaque deuxième anneau (43, 66), sollicitant élastiquement le premier anneau correspondant (21, 62) vers sa position active, le retient ainsi en contrainte élastique d'appui d'étanchéité contre le premier anneau de l'autre tuyau ou analogue (51, 1), faisant office de face périphérique antagoniste, au moins chacun des premiers anneaux étant étanches à cet effet.

19. Procédé de fabrication d'un tuyau ou analogue selon l'une quelconque des revendications 1 à 13, comportant la succession des étapes consistant à:
c) réaliser, notamment par moulage de béton, un tuyau ou analogue comportant au moins un about tubulaire (7) d'axe longitudinal (2) déterminé, présentant une face annulaire frontale (14), transversale, d'extrémité et une face périphérique longitudinale (9) d'étanchéité placée en retrait, longitudinalement, par rapport à la face frontale (14) en intégrant dans une gorge annulaire transversale (15) de la face périphérique d'étanchéité (9) un premier anneau transversal (21), ancré dans la gorge (15) par une zone du premier anneau (21) et de la gorge (15) constituant la zone respective la plus proche, longitudinalement, de la face frontale (14),
d) faire fléchir le premier anneau (21) jusqu'à une position active dans laquelle il fait partiellement saillie transversalement hors de la gorge (15), par rapport à un prolongement géométrique (23) de la face périphérique (9) d'étanchéité, en s'éloignant progressivement de celui-ci dans le sens (5) d'un éloignement par rapport à la face frontale (14),
caractérisé en ce que l'on met en oeuvre l'étape b en emboîtant dans une zone de la gorge (15) située à l'opposé, longitudinalement, de la face frontale (14) par rapport au premier anneau (21) un talon (44) d'un deuxième anneau transversal (43), élastiquement compressible, présentant au contact du premier anneau (21) une face (47) servant d'appui pour celui-ci à l'opposé, longitudinalement, de la face frontale (14).

20. Procédé de fabrication d'un tuyau ou analogue selon la revendication 19, caractérisé en ce que l'on met en oeuvre l'étape a par la succession des étapes consistant a:
a₁) choisir ou réaliser un anneau de coffrage (25), d'axe longitudinal déterminé (2), présentant une face annulaire frontale (25), transversale, de coffrage complémentaire de la face frontale (14) à réaliser et une face périphérique longitudinale (26) de coffrage placée en saillie, longitudinalement, par rapport à la face frontale de coffrage (25) et complémentaire de la face périphérique d'étanchéité (9) à réaliser, abstraction faite de la gorge (15) de celle-ci,
a₂) fixer de façon amovible le premier anneau (21), en position de repos, sur la face périphérique de coffrage (26) dans une position correspondant à celle de la gorge (15), le premier anneau (21) présentant un relief d'ancrage (20) en saillie transversale à l'opposé de la face périphérique de coffrage (26), dans la zone du premier anneau (21) la plus proche, longitudinalement, de la face frontale de coffrage (25),
a₃) assembler à l'anneau de coffrage (24) des organes longitudinaux de coffrage (36, 38) définissant avec lui une empreinte de moulage (40) de forme complémentaire de celle du tuyau ou analogue (1) à réaliser,
a₄) emplir l'empreinte (40) d'un matériau durcissable à l'état fluide, notamment du béton, en noyant dans ce matériau le premier anneau (21) en position de repos, qui y ménage la gorge (15) et s'y ancre par son relief d'ancrage (20),
a₅) autoriser ou provoquer le durcissement du matériau durcissable et, après qu'il ait suffisamment durci, séparer des organes de coffrage (36, 38) et de l'anneau de coffrage (24) l'ensemble (41) formé par le matériau durcissable et par le premier anneau (21) en position de repos, ancré dans ce matériau par son relief d'ancrage (20).
